# EUROPÄISCHE PATENTSCHRIFT

(11) **EP 3 083 474 B1**
(45) Veröffentlichungstag und Bekanntmachung des Hinweises auf die Patenterteilung: **10.01.2018**
(21) Anmeldenummer: 14800084.7
(22) Anmeldetag: 21.11.2014
(51) Int. Cl.: B66B 5/16

(54) **SICHERER AKTUATOR FÜR EINE AUFZUGSANLAGE**
SECURE ACTUATOR FOR A LIFT SYSTEM
ACTIONNEUR SÛR POUR UNE INSTALLATION D'ASCENSEUR

(30) Priorität: 19.12.2013 EP 13198658
(43) Veröffentlichungstag der Anmeldung: 26.10.2016
(73) Patentinhaber: Inventio AG, 6052 Hergiswil (CH)
(72) Erfinder: STUDER, Christian, CH-6010 Kriens (CH); BITZI, Raphael, CH-6006 Luzern (CH)
(86) Internationale Anmeldenummer: PCT/EP2014/075224
(87) Internationale Veröffentlichungsnummer: WO 2015/090840

(56) Entgegenhaltungen:
- EP-A1- 0 854 320
- WO-A1-2012/080102

## Beschreibung

Die Erfindung betrifft einen sicheren Aktuator für eine Aufzugsanlage und ein Verfahren zum Betreiben dieses Aktuators gemäss den unabhängigen Patentansprüchen.
Im Aufzugsbau gibt es zahlreiche Anwendungen für sicher betätigbare Aktuatoren zum Betätigen von Sicherheitsbremsen, Türschlössern, Türöffnungsmechanismen, oder Systeme zum Bereitstellen temporäre Sicherheitsräume. Bekannte Lösungen basieren in der Regel auf elektromechanischen Bauelementen, wie beispielsweise Spindelmotoren, Hubmagnete und dergleichen, mit denen ein Aktuator zuverlässig betätigbar ist. Solche Bauelemente sind aus rein sicherheitstechnischen Überlegungen sehr zuverlässig zu betreiben, weisen jedoch ein relativ schweres Baugewicht auf und sind relativ hohe Energiekonsumenten. Zudem ist für deren Einbau in eine Aufzugsanlage ein relativ grosser Einbauraum vorzusehen. Schliesslich sind auch gewisse Lärmemissionen, welche die wahrnehmbare Fahrqualität im Kabineninnern stören können, nicht auszuschliessen. Insbesondere die Verbesserung des Baugewichts und der Einbaugrösse, sind Faktoren, denen ein Fachmann bei der Auslegung einer Aufzugsanlage stets eine hohe Aufmerksamkeit beimisst.

Aus der WO2012080102 ist ein Rückstellelement nach dem Oberbegriff des Anspruchs 1 bekannt.

Es ist daher Aufgabe der Erfindung einen verbesserten Aktuator für sichere Anwendungen in einer Aufzugsanlage zu schaffen, der insbesondere eine relativ kleine Einbaugrösse und ein leichtes Baugewicht aufweist.
Diese Aufgabe wird mit einem Aktuator mit den Merkmalen der unabhängigen Patentansprüche gelöst.
Vorzugsweise umfasst ein Aktuator für eine Aufzugsanlage, der einen aktivierten Zustand und einen ausgelösten Zustand einnehmen kann, ein Rückstellelement. Mittels dieses Rückstellelements ist der Aktuator vom ausgelösten Zustand in den aktivierten Zustand bringbar. Dabei ist das Rückstellelement aus einer Formgedächtnislegierung gefertigt. Bei einer ersten Temperatur nimmt das Rückstellelement eine erste Länge und bei einer zweiten Temperatur eine zweite Länge an. Das Rückstellelement ist dazu ausgelegt, nach einem Auslösen des Aktuators von der ersten Länge in die zweite Länge und wieder in die erste Länge zu wechseln. Hierbei stellt das Rückstellelement den Aktuator in den aktivierten Zustand zurück.

Unter einer Formgedächtnislegierung wird ein Metall verstanden, welches die Fähigkeit besitzt, nach einer grossen Deformation seine ursprüngliche Gestalt wieder zu erlangen. Dieser "Erinnerungseffekt" ist der Eigenschaft zu verdanken, dass solche Metalle in zwei unterschiedlichen Kristallstrukturen existieren können. Die Formumwandlung basiert auf einer temperaturabhängigen Gitterumwandlung von einer austenitischen zu martensitischen Phase bzw. einer Hochtemperaturphase respektive einer Niedertemperaturphase. Beide Phasen können durch eine Temperaturänderung ineinander übergehen. Die Temperaturen für die Formumwandlung können je nach gewählter Zusammensetzung der Legierung in einem weiten Bereich eingestellt werden. Besonders Legierungen auf der Basis von Titan und Nickel, wie beispielsweise NiTi oder Nitinol, sind in der Praxis dank ihren ausgewogenen Eigenschaften etabliert.

Desweiteren kann unter Länge wortsinngemäss eine Dimension des Rückstellelements verstanden werden, bei der ein Körper, wie beispielsweise ein Draht, Stab oder dergleichen, die grösseren Ausmasse als beispielsweise eine Breite aufweist. Im Zusammenhang mit der Erfindung soll unter Länge aber auch die Länge irgendeiner Dimension eines beliebigen Körpers verstanden werden, die in Abhängigkeit der Temperatur einen Ausdehnungsunterschied aufweisen kann, der ausreichend ist, um den Aktuator rückzustellen.

Vorteilhaft ist, dass das Rückstellelement aus Formgedächtnislegierung äusserst effizient arbeitet. Deren spezifische Arbeitsleistung übertrifft diejenige von anderen Aktuatorwerkstoffen um ein Vielfaches. Entsprechend ist das Rückstellelement bzw. der Aktuator sehr kompakt und leicht fertigbar. Zudem ist die Längenänderung des Rückstellelements absolut geräuschfrei und trägt wesentlich zur Verbesserung des wahrgenommenen Fahrkomforts bei.

Vorzugsweise ist die erste Länge kürzer dimensioniert als die zweite Länge des Rückstellelements.

In einer besonders bevorzugten Ausführung ist das Rückstellelement drahtförmig ausgelegt. Ein Durchmesser eines Drahtes kann variieren, je nachdem wie gross die Kraft zu dimensioniert ist, um einen Aktuator zurückzusetzen. Es können auch mehrere parallel angeordnete Drähte aus einer Formgedächtnislegierung vorgesehen sein.

Vorzugsweise verfügt der Aktuator über eine Halterung und einen Anker, der in einem aktivierten Zustand des Aktuators gegen eine Zugkraft an der Halterung haltbar ist, wobei das Rückstellelement die Zugkraft auf den Anker überträgt. Besonders bevorzugt ist die Halterung magnetisch wirkend. Beispielsweise ist diese Halterung als Elektromagnet ausgelegt. Der Anker seinerseits ist besonders bevorzugt aus einem ferromagnetischen Material gefertigt. In einem aktivierten Zustand des Aktuators wird der Elektromagnet bestromt und hält den Anker in einer aktiven Ruhestellung. Die Anziehungskraft zwischen der Halterung und dem Anker ist im aktivierten Zustand des Aktuators stets grösser als die Zugkraft.

Alternativ dazu kann die Halterung auch elektromechanisch wirkend sein. Dazu verfügt die Halterung über einen Haken. Der Anker ist vorzugsweise als Öse ausgelegt, in die der Haken eingreifen kann. In einem aktivierten Zustand des Aktuators wird die Halterung bestromt, wobei der Haken von der Halterung in einer ersten Position haltbar ist, in der dieser in die Öse des Ankers eingreift und diesen somit gegen die Zugkraft hält. Im ausgelösten Zustand hingegen wird die Halterung nicht mehr mit Strom versorgt. Dabei nimmt der Haken der Halterung eine zweite Position ein, in der dieser die Öse des Ankers frei gibt.

Unter aktiver Ruhestellung wird eine Ruhestellung verstanden, in welcher der Aktuator beispielsweise eine Sicherheitsbremse in einem geöffneten Zustand hält. Sobald die Stromzufuhr zur Halterung unterbrochen wird, ist der Anker von der Halterung freigegeben. Entsprechend wird der Anker in Richtung der Zugkraft von der Halterung weggezogen und die Sicherheitsbremse aktiviert. Hierbei ist es von besonderem Vorteil, dass der Aktuator ausfallsicher ausgelegt ist.

Vorzugsweise ist der Anker in einem gelösten Zustand des Aktuators in Richtung der Zugkraft von der Halterung lösbar.

Vorzugsweise ist die Länge des Rückstellelements dermassen veränderbar, insbesondere verlängerbar, dass der Anker nach Auslösen des Aktuators wieder in Wirkkontakt mit der Halterung bringbar ist. Besonders bevorzugt verfügt der Aktuator hierbei über eine Rückstellfeder, mit welcher der Anker in Wirkkontakt mit der Halterung bringbar ist.

Die Rückstellkraft der Rückstellfeder ist kleiner, als die Zugkraft, um ein zuverlässiges Betätigen des Aktuators zu gewährleisten. Die Rückstellkraft der Rückstellfeder ist dermassen eingestellt, dass diese hinreichend gross ist, das Rückstellelement in der zweiten Länge zu spannen und entsprechend mit der Halterung in Wirkkontakt zu bringen.

Vorzugsweise ist die erste Temperatur grösser als die zweite Temperatur, wobei die erste Länge des Rückstellelements mittels Erwärmen des Rückstellelements erzielbar ist. Besonders bevorzugt liegt die erste Temperatur über der Umgebungstemperatur des Rückstellelements, insbesondere über 50°C. Die Umgebungstemperatur, beispielsweise im Schacht einer Aufzugsanlage, kann in einer gewissen Bandbreite schwanken. Diesem Umstand ist insofern Rechnung zu tragen, als dass die erste Temperatur dermassen vorbestimmt ist, dass diese stets grösser als eine für den Normalbetrieb höchst vorgegebene Umgebungstemperatur ist. Für die Auslegung einer Aufzugsanlage ist eine maximal anzunehmende Temperatur für deren Normalbetrieb von den Zulassungsbehörden vorgegeben. In Europa beträgt diese höchstvorgegebene Temperatur 50 °C. Selbstredend kann dieser Temperaturwert von Zulassungsbehörden anderer Länder davon abweichend vorgegeben sein.

Vorzugsweise verfügt der Aktuator für die Erwärmung des Rückstellelements über eine der folgenden Wärmequellen:
- eine Induktionsspule, in der das Rückstellelement angeordnet ist,
- eine Heizspirale, in der das Rückstellelement angeordnet ist,
- eine Schaltung des Rückstellelements als Widerstand in einem Stromkreislauf, oder
- ein Medium, das in Kontakt mit dem Rückstellelement bringbar ist.

Vorteilhaft ist hierbei, dass das Rückstellelement in einem ausgelösten Zustand des Aktuators auch bei einem Stromunterbruch seine zweite Länge erreichen kann.

Das Medium kann in einem gasförmigen, flüssigen oder festen Aggregatszustand vorliegen, das seinerseits mittels einer Wärmequelle auf eine zweckmässige Temperatur gewärmt ist, die ausreichend hoch ist, damit das Rückstellelement zumindest auf die erste Temperatur bringbar ist.

Alternativ ist die zweite Temperatur kleiner als eine Umgebungstemperatur des Rückstellelements, insbesondere kleiner als -10°C. Dabei ist die zweite Länge des Rückstellelements mittels Kühlen des Rückstellelements erzielbar. Die Umgebungstemperatur kann in einer gewissen Bandbreite schwanken. Diesem Umstand ist in dieser Alternative insofern Rechnung zu tragen, als dass die zweite Temperatur dermassen vorbestimmt ist, dass diese stets kleiner als eine für den Normalbetrieb minimal vorgegebene Umgebungstemperatur ist. Für die Auslegung einer Aufzugsanlage ist eine minimal anzunehmende Temperatur für den Normalbetrieb von den Zulassungsbehörden vorgegeben. In Europa beträgt diese minimal vorgegebene Temperatur -10 °C. Selbstredend kann dieser Temperaturwert von Zulassungsbehörden anderer Regionen bzw. Länder davon abweichend vorgegeben sein.

Vorzugsweise verfügt der Aktuator in der alternativen Ausführung für die Kühlung des Rückstellelements über eine der folgenden Kühlquellen:
- ein Peltierelement, das mit dem Rückstellelement verbunden ist, oder
- ein Medium, das in Kontakt mit dem Rückstellelement bringbar ist.

Vorteilhaft ist, dass in der alternativen Ausführung des Aktuators das Rückstellelement im aktivierten Zustand des Aktuators keine Energie konsumiert, da die Hochtemperaturphase bzw. die erste Länge des Rückstellelements bereits bei Umgebungstemperatur vorliegt. D.h. dass Energie nur zwecks Kühlung des Rückstellelements aufgebracht wird, um das Rückstellelement auf die zweite Länge zu bringen.

Unter einem Peltierelement wird ein elektrothermischer Wandler verstanden, der basierend auf dem Peltier-Effekt bei Stromdurchfluss eine Temperaturdifferenz erzeugt. Grundlage für den Peltier-Effekt ist der Kontakt von zwei Halbleitern, die ein unterschiedliches Energieniveau der Leitungsbänder besitzen. Hierbei weist der n-dotierte Halbleiter ein niedrigeres Energieniveau auf als der p-dotierte Halbleiter. Leitet man einen Strom durch zwei hintereinanderliegende Kontaktstellen dieser Materialien, so wird an der Kontaktstelle vom n-dotierten zum p-dotierten Halbleiter Wärmeenergie aufgenommen, damit ein Elektron in das energetisch höhere Leitungsband des benachbarten Halbleitermaterials gelangt. Die Kontaktstelle wird entsprechend gekühlt.

Das Medium kann in einem gasförmigen, flüssigen oder festen Aggregatszustand vorliegen, das seinerseits mittels einer Kühlquelle oder andererseits mittels eines Aggregatszustandswechsels und einhergehendem Wärmeentzug auf eine zweckmässige Temperatur gekühlt ist, die ausreichend tief ist, damit das Rückstellelement zumindest auf die zweite Temperatur bringbar ist.

Vorzugsweise ist der Anker mit einer Ankerführung verbunden, mit welcher der Anker innerhalb eines Gehäuses geführt ist. Entsprechend kann eine translatorische Führung erzielt werden. Hierbei ist es vorteilhaft, dass der Anker definiert von und zur Halterung bewegbar ist.

In einem weiteren Aspekt bezieht sich die Erfindung auf ein Verfahren zum Betreiben des Aktuators und umfasst folgende Schritte:
A) Auslösen des Aktuators,
B) Ausdehnen der Länge des Rückstellelements bei der zweiten Temperatur und
C) Verkürzen der Länge des Rückstellelements bei der ersten Temperatur, um den Aktuator in den aktivierten Zustand zurückzustellen.

Die Erfindung wird nachfolgend anhand von Ausführungsbeispielen besser beschrieben. Es zeigen:
- Figur 1: schematisch den Grundaufbau des Aktuators in einem Querschnitt;
- Figur 2a: schematisch einen ersten Zustand des Aktuators in einem Schaltzyklus;
- Figur 2b: schematisch einen zweiten Zustand des Aktuators im Schaltzyklus; und
- Figur 2c: schematisch einen dritten Zustand des Aktuators im Schaltzyklus.

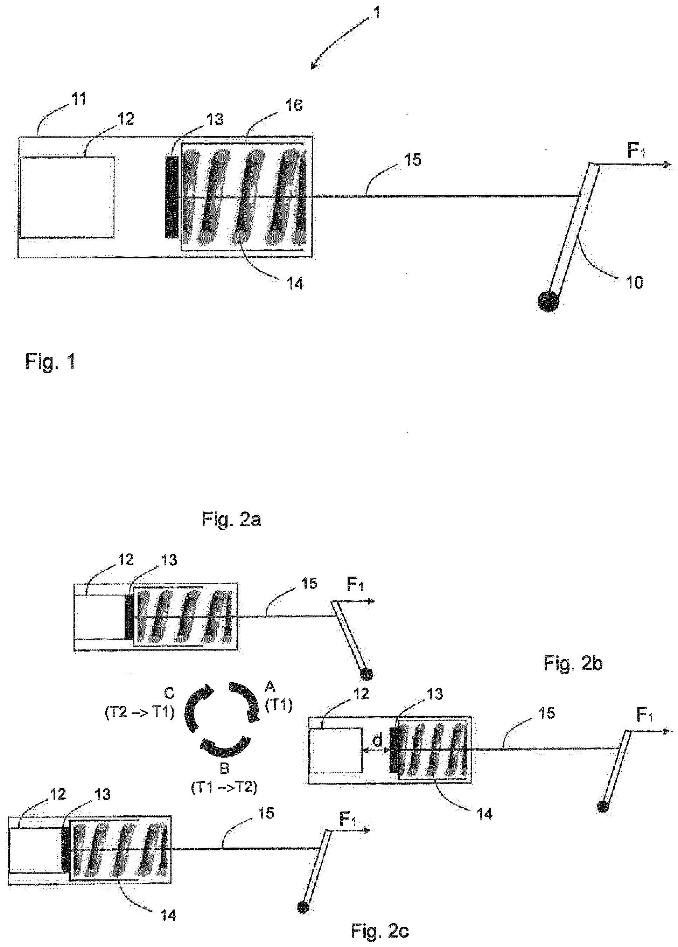

Figur 1 zeigt eine schematische Darstellung des Aktuators 1. Der Aktuator 1 verfügt über ein Gehäuse 11, in welchem eine Halterung 12, ein Anker 13, eine Ankerführung 16 und eine Rückstellfeder 14 angeordnet sind. Der Anker 13 und die Ankerführung 16 sind fest miteinander verbunden. Hierbei ist eine translatorische Bewegung der Ankerführung 16 bzw. des Ankers 13 selbst durch das Gehäuse 11 vorgegeben.

In einer bevorzugten Ausführung ist die Halterung 12 als Elektromagnet ausgeführt und der Anker aus einem ferromagnetischen Werkstoff gefertigt. Die Halterung 12 kann also eine magnetische Anziehungskraft auf den Anker 13 ausüben und diesen in einer aktiven Ruhestellung des Aktuators 1 halten. Dies erfolgt solange die Halterung 12 mit genügend elektrischer Energie versorgt wird.

Desweiteren ist der Anker 13 mit einem Rückstellelement 15 verbunden. Das Rückstellelement 15 kann beispielsweise als Draht ausgelegt sein. Das Rückstellelement 15 überträgt eine Zugkraft F1 auf den Anker 13. Im gezeigten Beispiel wird das Rückstellelement 15 mit der Zugkraft F1 über einen Hebel 10 beaufschlagt. Selbstredend kann das Rückstellelement 15 auch direkt mit der Zugkraft F1 beaufschlagt sein. Die Zugkraft F1 stellt beispielsweise die Auslösekraft einer Sicherheitsbremse dar, die in einer Druckfeder gespeichert sein kann oder die durch die Schwerkrafteinwirkung vorgegeben ist. Eine Haltekraft, welche die Halterung 12 auf den Anker 13 ausübt, ist grösser als die Zugkraft F1. Somit kann die Halterung 12 den Anker 13 in der aktiven Ruhestellung festhalten. Bei einem Unterbruch der elektrischen Energieversorgung der Halterung 12 nimmt der Aktuator 1 einen ausgelösten Zustand ein und die in der Druckfeder gespeicherte Energie wird für eine Aktivierung der Sicherheitsbremse freigegeben.

Das Rückstellelement 15 selbst ist beispielsweise aus einer Formgedächtnislegierung gefertigt, insbesondere aus einer Nickel-Titan-, Nitinol-, Nickel-Titan-Kupfer-, Kupfer-Zink-, Kupfer-Zink-Aluminium-, Kupfer-Aluminium-Nickel-, Eisen-Nickel-Aluminium-, Eisen-Mangan-Silizium-, oder Zink-Gold-Kupfer-Legierung. Das Rückstellelement 15 liegt bei einer ersten Temperatur T1 bzw. einer Hochtemperaturphase in einer ersten Länge und liegt bei einer zweiten Temperatur T2 bzw. einer Niedertemperaturphase in einer zweiten Länge vor, wobei die erste Länge kürzer dimensioniert ist als die zweite Länge. In einer ersten Ausführung ist die Legierung des Rückstellelements 15 dermassen ausgelegt, dass die Temperatur T1 oberhalb einer Umgebungstemperatur und die Temperatur 2 im Bereich der Umgebungstemperatur liegt. In einer zweiten Ausführung hingegen ist die Legierung des Rückstellelements dermassen ausgelegt, dass die Temperatur T1 im Bereich der Umgebungstemperatur und die Temperatur T2 unterhalb der Umgebungstemperatur liegt.

Die Rückstellfeder 14 übt auf den Anker 13 bzw. das Rückstellelement 15 eine Rückstellkraft aus. Mittels dieser Rückstellkraft kann das Rückstellelement 15 in seiner zweiten Länge gespannt gehalten werden. Die Rückstellkraft der Rückstellfeder ist kleiner als die Zugkraft F 1 eingestellt, damit beispielsweise die Sicherheitsbremse in einem ausgelösten Zustand des Aktuators 1 zuverlässig aktiviert wird.

In den Figuren 2a, 2b und 2c ist ein vollständiger Zyklus der Funktionsweise des Aktuators 1 aufgezeigt. Die Figur 2a zeigt den Aktuator 1 in einem aktivierten Zustand. Dieser Zustand zeichnet sich dadurch aus, dass der Anker 13 von der Halterung 12 gegen die Zugkraft F1 in einer aktiven Ruheposition gehalten wird. Das Rückstellelement 15 nimmt hierbei eine erste Temperatur T1 ein, bei der das Rückstellelement 15 in seiner ersten Länge vorliegt. Das Rückstellelement 15 wird in einer ersten Ausführung mittels einer Wärmequelle auf der ersten Temperatur T1 gehalten. In einer besonders einfachen Ausgestaltung ist das Rückstellelement 15 selbst als Wärmequelle ausgelegt, indem es als Widerstand in einen elektrischen Schaltkreis integriert ist. Die Temperatur des Rückstellelements 15 wird hierbei über die Stromstärke, die durch den Widerstand bzw. das Rückstellelement 15 fliesst eingestellt. Selbstredend ist jede eingangs erwähnte Wärmequelle oder andere geeignet Wärmequelle einsetzbar, um das Rückstellelement 15 zumindest auf der ersten Temperatur T1 zu halten.

Alternativ dazu liegt in einer zweiten Ausführung des Rückstellelements 15 die Temperatur T1 im Bereich der Umgebungstemperatur. Hierbei nimmt das Rückstellelement 15 ohne Wärmequelle seine erste Länge ein.

Beim ersten Schritt A wird der Aktuator 1 ausgelöst. Dies erfolgt durch einen Unterbruch der Energieversorgung der Halterung 12 aufgrund eines Signals einer Steuereinheit, das einen unsicheren Zustand der Aufzugsanlage anzeigt. Da in diesem Zustand die Haltekraft der Halterung 12 ausfällt, wird der Anker 13 aufgrund der wirkenden Zugkraft F1 von der Halterung gelöst und nimmt einen vorbestimmten Abstand d zur Halterung 12 ein. Der Abstand d ist durch eine geeignete Dimensionierung des Gehäuses 11, der Ankerführung 16 und/oder der Rückstellfeder 15 bestimmbar. Das Rückstellelement 15 wird während dieses Schritts vorzugsweise auf der ersten Temperatur T1 gehalten.

Die Figur 2b zeigt den Aktuator 1 in einem ausgelösten Zustand.

Im zweiten Schritt B wird das Rückstellelement 15 von der ersten Temperatur T1 auf eine zweite Temperatur T2 gebracht, in der das Rückstellelement 15 eine zweite Länge einnimmt. Hierbei wird in der ersten Ausführung des Rückstellelements 15 die Wärmequelle ausgeschalten, also beispielsweise der Strom über das Rückstellelement 15 unterbrochen. Als Folge nimmt das Rückstellelement 15 die Umgebungstemperatur an. In dieser ersten Ausführung reicht das Abkühlen des Rückstellelements 15 auf die Umgebungstemperatur aus, um die zweite Temperatur T2 zu erreichen.

Alternativ dazu kann das Rückstellelement 15 in seiner zweiten Ausführung von der Umgebungstemperatur auf die zweite Temperatur T2 mittels einer Kühlquelle gekühlt werden. Beispielsweise kann das Rückstellelement 15 mit einem kühlen Medium, wie flüssigem Stickstoff, in Kontakt gebracht werden. Selbstredend kann jede eingangs erwähnte Kühlquelle oder andere geeignete Kühlquelle eingesetzt werden, um das Rückstellelement 15 zumindest auf die zweite Temperatur T2 zu bringen.

Während des Schritts B dehnt sich das Rückstellelement 15 dermassen aus bzw. nimmt die zweite Länge an, dass die Distanz d zwischen dem Anker 13 und der Halterung 13 überwindbar ist. Mittels der Rückstellfeder 14 wird der Anker 13 in Richtung der Halterung 13 zurückgestellt, bis der Anker 13 in den Wirkbereich der Halterung 13 gelangt. Die Halterung 13 wird hierbei wieder mit Energie versorgt und übt eine magnetische Anziehungskraft auf den Anker 13 aus.

Die Figur 2c zeigt den Aktuator 1 in einem Zustand, in dem dieser für eine Rückstellung bereit ist. Insbesondere steht der Anker 13 dank der zweiten Länge des Rückstellelements 15 in Wirkkontakt mit der Halterung 13.

In einem dritten Schritt C wird schliesslich das Rückstellelement 15 auf die erste Temperatur T1 gebracht, indem beispielsweise die Wärmequelle aktiviert oder alternativ die Kühlquelle ausgeschaltet wird. Bei Erreichen der Temperatur T1 nimmt das Rückstellelement 15 in die erste Länge an und verkürzt sich um den Abstand d. Entsprechend wird der Aktuator 1 in den aktivierten Zustand zurückgestellt. Die bei der Längenänderung des Rückstellelements aufgebrachte Kraft ist grösser als die Zugkraft F1.

## Patentansprüche

1. Aktuator (1) für eine Aufzugsanlage, der einen aktivierten Zustand und einen ausgelösten Zustand einnehmen kann, mit einem Rückstellelement (15), um den Aktuator (1) vom ausgelösten Zustand in den aktivierten Zustand zu bringen,
**dadurch gekennzeichnet, dass**
das Rückstellelement (15) aus einer Formgedächtnislegierung gefertigt ist, bei einer ersten Temperatur (T1) eine erste Länge und bei einer zweiten Temperatur (T2) eine zweite Länge einnimmt, wobei das Rückstellelement (15) dazu ausgelegt ist, nach einem Auslösen des Aktuators von der ersten Länge in die zweite Länge und wieder in die erste Länge zu wechseln und hierbei den Aktuator (1) in den aktivierten Zustand rückstellt.

2. Aktuator (1) nach Anspruch 1, **dadurch gekennzeichnet, dass**
die erste Länge kürzer dimensioniert ist als die zweite Länge.

3. Aktuator (1) nach Anspruch 1 oder 2, **dadurch gekennzeichnet, dass**
das Rückstellelement (15) drahtförmig ausgelegt ist.

4. Aktuator (1) nach einem der Ansprüche 1 bis 3, **dadurch gekennzeichnet, dass**
der Aktuator (1) über eine Halterung (12), insbesondere eine magnetisch bzw. eine elektromechanisch wirkende Halterung (12), und einen Anker (13), insbesondere aus einem ferromagnetischen Material gefertigt bzw. als Öse ausgelegt, verfügt, der in einem aktivierten Zustand des Aktuators (1) gegen eine Zugkraft (F1) an der Halterung (12) haltbar ist, wobei das Rückstellelement (15) die Zugkraft (F1) auf den Anker (12) überträgt.

5. Aktuator (1) nach einem der Ansprüche 1 bis 4, **dadurch gekennzeichnet, dass**
der Anker (13) in einem gelösten Zustand des Aktuators (15) in Richtung der Zugkraft (F1) von der Halterung (12) lösbar ist.

6. Aktuator (1) nach einem der vorhergehenden Ansprüche, **dadurch gekennzeichnet, dass** eine Länge des Rückstellelements (15) dermassen änderbar, insbesondere verlängerbar ist, dass der Anker (13) nach Auslösen des Aktuators (1) wieder in Wirkkontakt mit der Halterung (12) bringbar ist.

7. Aktuator (1) nach Anspruch 6, **dadurch gekennzeichnet, dass**
der Aktuator (1) über eine Rückstellfeder (14) verfügt, mit welcher der Anker (13) in Wirkkontakt mit der Halterung (12) bringbar ist.

8. Aktuator (1) nach Anspruch 7, **dadurch gekennzeichnet, dass**
die Rückstellkraft der Rückstellfeder kleiner ist als die Zugkraft (F1).

9. Aktuator (1) nach einem der vorhergehenden Ansprüche, **dadurch gekennzeichnet, dass**
die erste Temperatur (T1) grösser ist als die zweite Temperatur (T2), wobei die erste Länge des Rückstellelements (15) mittels Erwärmen des Rückstellelements (15) erzielbar ist, und wobei die erste Temperatur über einer Umgebungstemperatur, insbesondere über 50°C liegt.

10. Aktuator (1) nach einem der Ansprüche 1 bis 8, **dadurch gekennzeichnet, dass**
die erste Temperatur (T1) grösser ist als die zweite Temperatur (T2), wobei die zweite Länge des Rückstellelements (15) mittels Kühlen des Rückstellelements (15) erzielbar ist, und wobei die zweite Temperatur unter einer Umgebungstemperatur, insbesondere unter -10°C liegt.

11. Aktuator (1) nach Anspruch 4, **dadurch gekennzeichnet, dass**
der Anker (13) mit einer Ankerführung (16) verbunden ist, mit welchem der Anker (13) innerhalb eines Gehäuses (11) führbar ist, wobei vorzugsweise eine translatorische Führung erzielbar ist.

12. Aktuator (1) nach Anspruch 9, **dadurch gekennzeichnet, dass**
der Aktuator (1) für die Erwärmung des Rückstellelements (15) über eine der folgenden Wärmequellen verfügt:
- eine Induktionsspule, in der das Rückstellelement (15) angeordnet ist,
- eine Heizspirale, in der das Rückstellelement (15) angeordnet ist,
- eine Schaltung des Rückstellelements (15) als Widerstand in einem Stromkreislauf, oder
- ein Medium, das in Kontakt mit dem Rückstellelement (15) bringbar ist.

13. Aktuator (1) nach Anspruch 10, **dadurch gekennzeichnet, dass**
der Aktuator (1) für die Kühlung des Rückstellelements (15) über eine der folgenden Kühlquellen verfügt:
- ein Peltierelement, das mit dem Rückstellelement (15) verbunden ist, oder
- ein Medium, das in Kontakt mit dem Rückstellelement (15) bringbar ist.

14. Verfahren für das Betätigen eines Aktuators (1) nach einem der vorhergehenden Ansprüche, umfassend die Schritte:
A) Auslösen des Aktuators (1),
B) Ausdehnen der Länge des Rückstellelements (15) bei der zweiten Temperatur (T2) und
C) Verkürzen der Länge des Rückstellelements (15) bei der ersten Temperatur (T1), um den Aktuator (1) in den aktivierten Zustand zurückzustellen.

## Claims

1. Actuator (1) for a lift installation, which can adopt an activated state and a triggered state, with a resetting element (15) for bringing the actuator (1) from the triggered state to the activated state, **characterised in that** the resetting element (15) is made from a shape memory alloy and takes on a first length at a first temperature (T1) and a second length at a second temperature (T2), wherein the resetting element (15) is designed to change, after triggering of the actuator, from the first length to the second length and back to the first length and **in that** case resets the actuator (1) to the activated state.

2. Actuator (1) according to claim 1, **characterised in that** the first length is dimensioned to be shorter than the second length.

3. Actuator (1) according to claim 1 or 2, **characterised in that** the resetting element (15) is of wire-shaped form.

4. Actuator (1) according to any one of claims 1 to 3, **characterised in that** the actuator (1) comprises a retainer (12), particularly a magnetically or electromechanically acting retainer (12), and an armature (13), particularly made of a ferromagnetic material or designed as an eye, which armature in an activated state of the actuator (1) can be retained at the retainer (12) against a tension force (F1), wherein the resetting element (15) transmits the tension force (F1) to the armature (12).

5. Actuator (1) according to any one of claims 1 to 4, **characterised in that** the armature (13) in a triggered state of the actuator (15) is releasable from the retainer (12) in the direction of the tension force (F1).

6. Actuator (1) according to any one of the preceding claims, **characterised in that** a length of the resetting element (15) is so variable, in particular extensible, that the armature (13) after triggering of the actuator (1) can be brought back into operative contact with the retainer (12).

7. Actuator (1) according to claim 6, **characterised in that** the actuator (1) comprises a restoring spring (14) by which the armature (13) can be brought into operative contact with the retainer (12).

8. Actuator (1) according to claim 7, **characterised in that** the restoring force of the restoring spring is lower than the tension force (F1).

9. Actuator (1) according to any one of the preceding claims, **characterised in that** the first temperature (T1) is higher than the second temperature (T2), wherein the first length of the resetting element (15) is achievable by means of heating the resetting element (15) and wherein the first temperature lies above an ambient temperature, particularly above 50° C.

10. Actuator (1) according to any one of claims 1 to 8, **characterised in that** the first temperature (T1) is higher than the second temperature (T2), wherein the second length of the resetting element (15) is achievable by means of cooling the resetting element (15) and wherein the second temperature lies below an ambient temperature, particularly below -10° C.

11. Actuator (1) according to claim 4, **characterised in that** the armature (13) is connected with an armature guide (16) by which the armature (13) can be guided within a housing (11), wherein preferably a translational guidance is achievable.

12. Actuator (1) according to claim 9, **characterised in that** the actuator (1) comprises one of the following heat sources for heating the resetting element (15):
- an induction coil in which the resetting element (15) is arranged,
- a heating coil in which the resetting element (15) is arranged,
- connection of the resetting element (15) as a resistor into a current circuit, and
- a medium able to be brought into contact with the resetting element (15).

13. Actuator (1) according to claim 10, **characterised in that** the actuator (1) comprises one of the following cooling sources for cooling the resetting element (15):
- a Peltier element connected with the resetting element (15), and
- a medium able to be brought into contact with the resetting element (15).

14. Method for actuating an actuator (1) according to any one of the preceding claims, comprising the steps of:
A) triggering the actuator (1),
B) extending the length of the resetting element (15) at the second temperature (T2) and
C) shortening the length of the resetting element (15) at the first temperature (T1) so as to reset the actuator (1) to the activated state.

## Revendications

1. Actionneur (1) pour une installation d'ascenseur, qui peut adopter un état activé et un état déconnecté, avec un élément de rappel (15) pour faire passer l'actionneur (1) de l'état déconnecté à l'état activé,
**caractérisé en ce que** l'élément de rappel (15) est fabriqué dans un alliage à mémoire de forme et adopte une première longueur à une première température (T1), et une seconde longueur à une seconde température (T2), l'élément de rappel (15) étant conçu pour passer de la première longueur à la seconde longueur, après une déconnexion de l'actionneur, et à nouveau à la première longueur, ramenant ainsi l'actionneur (1) à l'état activé.

2. Actionneur (1) selon la revendication 1, **caractérisé en ce que** la première longueur est calculée pour être plus courte que la seconde.

3. Actionneur (1) selon la revendication 1 ou 2, **caractérisé en ce que** l'élément de rappel (15) a la forme d'un fil.

4. Actionneur (1) selon l'une des revendications 1 à 3, **caractérisé en ce qu'**il dispose d'une fixation (12), en particulier une fixation (12) à action magnétique ou électromécanique, et d'un induit (13), en particulier fabriqué dans un matériau ferromagnétique ou conçu comme un oeillet, qui, dans un état activé de l'actionneur (1), est apte à être retenu au niveau de la fixation (12) à l'encontre d'une force de traction (F1), l'élément de rappel (15) transmettant ladite force de traction (F1) à l'induit (12).

5. Actionneur (1) selon l'une des revendications 1 à 4, **caractérisé en ce que** l'induit (13), dans un état dégagé de l'actionneur (15), est apte à être détaché de la fixation (12) dans le sens de la force de traction (F1).

6. Actionneur (1) selon l'une des revendications précédentes, **caractérisé en ce qu'**une longueur de l'élément de rappel (15) est apte à être modifiée, en particulier allongée, de telle sorte que l'induit (13), après la déconnexion de l'actionneur (1), est apte à être ramené en contact opérationnel avec la fixation (12).

7. Actionneur (1) selon la revendication 6, **caractérisé en ce que** l'actionneur (1) dispose d'un ressort de rappel (14) avec lequel l'induit (13) est apte à être amené en contact opérationnel avec la fixation (12).

8. Actionneur (1) selon la revendication 7, **caractérisé en ce que** la force de rappel du ressort de rappel est inférieure à la force de traction (F1).

9. Actionneur (1) selon l'une des revendications précédentes, **caractérisé en ce que** la première température (T1) est supérieure à la seconde température (T2), la première longueur de l'élément de rappel (15) pouvant être obtenue par réchauffement dudit élément de rappel (15), et la première température étant supérieure à une température ambiante, en particulier supérieure à 50°C.

10. Actionneur (1) selon l'une des revendications 1 à 8, **caractérisé en ce que** la première température (T1) est supérieure à la seconde température (T2), la seconde longueur de l'élément de rappel (15) pouvant être obtenue par refroidissement dudit élément de rappel (15), et la seconde température étant inférieure à une température ambiante, en particulier inférieure à - 10°C.

11. Actionneur (1) selon la revendication 4, **caractérisé en ce que** l'induit (13) est relié à un guide d'induit (16) avec lequel ledit induit (13) est apte à être guidé à l'intérieur d'un boîtier (11), un guidage de translation pouvant être obtenu, de préférence.

12. Actionneur (1) selon la revendication 9, **caractérisé en ce que** l'actionneur (1) dispose, pour le réchauffement de l'élément de rappel (15), de l'une des sources de chaleur suivantes :
- une bobine d'induction dans laquelle est disposé l'élément de rappel (15),
- une spirale chauffante dans laquelle est disposé l'élément de rappel (15),
- un montage de l'élément de rappel (15) sous forme de résistance dans un circuit électrique, ou
- un fluide qui est apte à être amené en contact avec l'élément de rappel (15).

13. Actionneur (1) selon la revendication 10, **caractérisé en ce que** l'actionneur (1) dispose, pour le refroidissement de l'élément de rappel (15), de l'une des sources de refroidissement suivantes :
- un élément Peltier qui est relié à l'élément de rappel (15), ou
- un fluide qui est apte à être amené en contact avec l'élément de rappel (15).

14. Procédé pour l'actionnement d'un actionneur (1) selon l'une des revendications précédentes, comprenant les étapes :
A) de déconnexion de l'actionneur (1),
B) d'allongement de la longueur de l'élément de rappel (15) en présence de la seconde température (T2), et
C) de raccourcissement de la longueur de l'élément de rappel (15) en présence de la première température (T1), afin de ramener l'actionneur (1) à l'état activé.
